# NEUE EUROPÄISCHE PATENTSCHRIFT

(11) **EP 2 032 264 B2**
(45) Veröffentlichungstag und Bekanntmachung des Hinweises auf die Entscheidung über den Einspruch: **26.06.2019**
(45) Hinweis auf die Patenterteilung: 29.07.2015
(21) Anmeldenummer: 07765567.8
(22) Anmeldetag: 22.06.2007
(51) Int. Cl.: B04B 1/20, F16H 37/08

(54) **SCHNECKENZENTRIFUGE MIT ANTRIEBSVORRICHTUNG**
HELICAL CONVEYOR CENTRIFUGE HAVING A DRIVE DEVICE
CENTRIFUGEUSE À VIS SANS FIN AVEC UN DISPOSITIF D'ENTRAÎNEMENT

(30) Priorität: 23.06.2006 DE 102006028804
(43) Veröffentlichungstag der Anmeldung: 11.03.2009
(73) Patentinhaber: GEA Mechanical Equipment GmbH, 59302 Oelde (DE)
(72) Erfinder: OVERBERG, Martin, 33442 Herzebrock-Clarholz (DE)
(74) Vertreter: Dantz, Jan Henning
(86) Internationale Anmeldenummer: PCT/EP2007/056255
(87) Internationale Veröffentlichungsnummer: WO 2007/147893

(56) Entgegenhaltungen:
- EP-A1- 1 056 545
- DE-A1- 2 811 887
- DE-C1- 4 310 158
- DE-U1- 9 409 109
- JP-A- 61 197 062
- Flottweg GmbH & Co. KGaA: "Innovative Zentrifugen-Technik", Flottweg Separation Technology - Prospekt, April 2005,

## Beschreibung

Die Erfindung betrifft eine Schneckenzentrifuge nach dem Oberbegriff des Anspruchs 1.

Eine derartige Zentrifuge kann beispielsweise als Vollmantelschneckenzentrifuge oder als Siebmantelschneckenzentrifuge ausgestaltet sein. Die DE 94 09 109 U1 offenbart eine gattungsgemäße Zentrifuge mit stufenloser Steuerung der Differenzdrehzahl zwischen Trommel und Räumwerkzeug.

Zum Stand der Technik wird zudem die WO 94/23223 genannt, die ein Planetengetriebe zeigt, das zum Antrieb von Schneckenzentrifugen eingesetzt wird.

Aus der Zeitschrift "Antriebstechnik 37 (1998, S. 39) ist ein mehrstufiger Differentialgetriebe-Antrieb bekannt, der an sich als Getriebe zum Antrieb von Dekantern bewährt hat, da er ein relativ gutes Einstellen von Differenzdrehzahlen ermöglicht. Er weist als Vorstufe eine zweistufige Planetengetriebeanordnung auf, die als Vier-Wellengetriebe ausgebildet ist, wobei im Betrieb eine Welle festgelegt ist. Dabei besteht das Problem, dass es zur Abdeckung eines größeren Bereiches an einstellbaren Differenzdrehzahlen notwendig ist, verschiedene Regel bzw. -Sekundärmotoren einzusetzen oder verschiedene Getriebeübersetzungen zu verwenden, was die Standardisierung erschwert und ggf. im Betrieb bei einer größeren Änderung der eingestellten Differenzdrehzahl einen Wechsel des Sekundärmotors erforderlich macht.

Zum Stand der Technik sei ferner die DE 28 11 887 C3 genannt. Danach werden zwei voneinander baulich getrennte Getriebe als Getriebeanordnung eingesetzt, was relativ aufwendig ist.

Zum technologischen Hintergrund werden noch die DE 198 06 374 C1, die US 3,343,786, die US 2,867,378 und die WO 02/081094 genannt.

Die EP 0 798 046 A1 offenbart einen Zentrifugenantrieb mit zwei Motoren - ein Hauptmotor und ein Regelmotor - und einem dreistufigen Getriebe offenbart, wobei die ersten beiden Getriebestufen als Umlaufgetriebestufen ausgebildet sind. Es wird an drei Wellen ein Drehmoment entweder in das Getriebe eingeleitet oder von diesem abgegriffen. Dabei fließt die Leistung des Regelmotors zuerst in die erste Getriebestufe, von dort in die zweite Getriebestufe und von dort zur nachgeschalteten Getriebestufe, so dass der Regelmotor für relativ große Leistungen ausgelegt sein muß. Das Getriebe bringt zudem das Problem mit sich, dass es relativ schwierig ist, kleine Differenzdrehzahlen präzise einzustellen.

Die Erfindung geht einen anderen Weg. Sie hat die Aufgabe, eine Schneckenzentrifuge zu schaffen, bei welcher ohne einen Austausch des Sekundärmotors ein relativ großer Differenzdrehzahlbereich einstellbar ist, wobei auch kleine Differenzdrehzahlen relativ einfach und präzise einstellbar sein sollen.

Die Erfindung löst diese Aufgabe durch den Gegenstand der Ansprüche 1 und 2.

Besonders vorteilhaft ist, dass der zweite Motor zum Antrieb der zweiten Getriebestufe des ersten Getriebes bei verschiedenen Differenzdrehzahlbereichen gleich bleiben kann.

Zudem wird der aus dem Stand der Technik bekannte Nachteil, dass Riemenschlupf bei relativ kleinen Differenzdrehzahlen zu schlecht vorhersehbaren Ergebnissen führt, vermieden. Der Gegenstand der Erfindung ermöglicht vielmehr auch eine relativ präzise Einstellung von kleinen Differenzdrehzahlen zwischen Trommel und Schnecke.

Die erfindungsgemäße Konstruktion baut zudem einfach und kompakt.

Eine Voreinstellung des Differenzdrehzahlbereiches kann auf einfache Weise durch Austausch des Riementriebes zur ersten Getriebestufe realisiert werden.

Die genaue Einstellung innerhalb des jeweiligen Bereiches erfolgt dann durch Regelung oder Steuerung der Motordrehzahl des zweiten Motors.

Durch die Maßnahme, dass die erste Getriebestufe über drei Antriebswellen angetrieben wird (z.B. über Riementriebe oder direkt und mit zwei oder drei Motoren), tritt keine Umlaufleistung auf, so dass die Anzahl der Riemen gering gehalten werden kann, so dass die Belastung der Wellen in diesem Bereich gering ist.

Mit einem ersten Motor als Hauptmotor wird das Gehäuse angetrieben, so dass ein Umlaufgetriebe realisiert wird. Der Hauptmotor treibt ferner vorzugsweise die erste Getriebestufe zweifach, wohingegen über einen zweiten Motor als Regelmotor ein Drehmoment in die zweite Getriebestufe geleitet wird, so dass die Schnecke vom Regelmotor und vom Hauptmotor angetrieben wird, wohingegen nur Hauptmotor die Trommel dreht.

Es ist besonders zweckmäßig, die für den Schneckenantrieb erforderliche Leistung auf den Sekundärmotor und den Trommelmotor aufzuteilen.

Der Regelmotor bildet seinen Drehzahlbereich dann auf einen kleinen Differenzdrehzahlbereich ab.

Hierdurch lässt sich die gewünschte Differenzdrehzahl mit hoher Genauigkeit einstellen. Der Regelmotor und der zugehörige Frequenzumrichter können hinsichtlich der Leistung genau auf den verfahrenstechnisch erforderlichen Verstellbereich ausgelegt werden und sind somit nicht unnötig groß dimensioniert. Die übrige Leistung wird vom Trommelmotor eingespeist. Dies führt bei vorteilhafter Ausführung zu einem besseren Gesamtwirkungsgrad.

Diese Aufteilung der Leistung auf die beiden Motoren gelingt entsprechend der fahrbaren Differenzdrehzahlbereiche durch Variation der Riemenübersetzung mit den Wechselscheiben.

Vorteilhafte Ausgestaltungen der Erfindung sind den Unteransprüchen zu entnehmen.

Nachfolgend wird die Erfindung unter Bezug auf die Zeichnung anhand von Ausführungsbeispielen näher erörtert. Es zeigen:
- Fig. 1: eine schematische Darstellung einer Vollmantel-Schneckenzentrifuge mit ihrem Antrieb;
- Fig. 2: eine Ausschnittsvergrößerung aus Fig. 1;
- Fig. 3a: ein Schema des Aufbaus der ersten zwei Getriebestufen für die Zentrifuge aus Fig.1;
- Fig. 3b: ein Schema des Aufbaus einer alternativen Ausgestaltung der ersten zwei Getriebestufen für eine Zentrifuge nach Art der Fig.1;
- Fig. 4: eine Schnittansicht einer Getriebeanordnung nach Art der Fig 1 und 3a;
- Fig. 5, 6 und 8: schematische Darstellungen von alternativen Ausgestaltungen der Erfindung nach Art der Darstellung der Fig. 2;
- Fig. 7: eine nicht unter den Anspruch 1 fallende Ausgestaltung; und
- Fig. 9: ein Diagramm zur Veranschaulichung verschiedener mit der Getriebeanordnung der Fig. 1 realisierbarer Differenzdrehzahlbereiche.

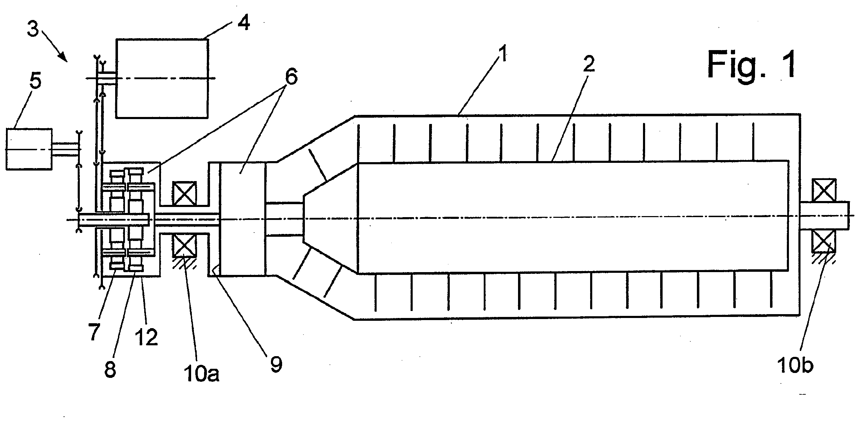

Nachfolgend seien zunächst Fig. 1, 2 und 3a beschrieben.

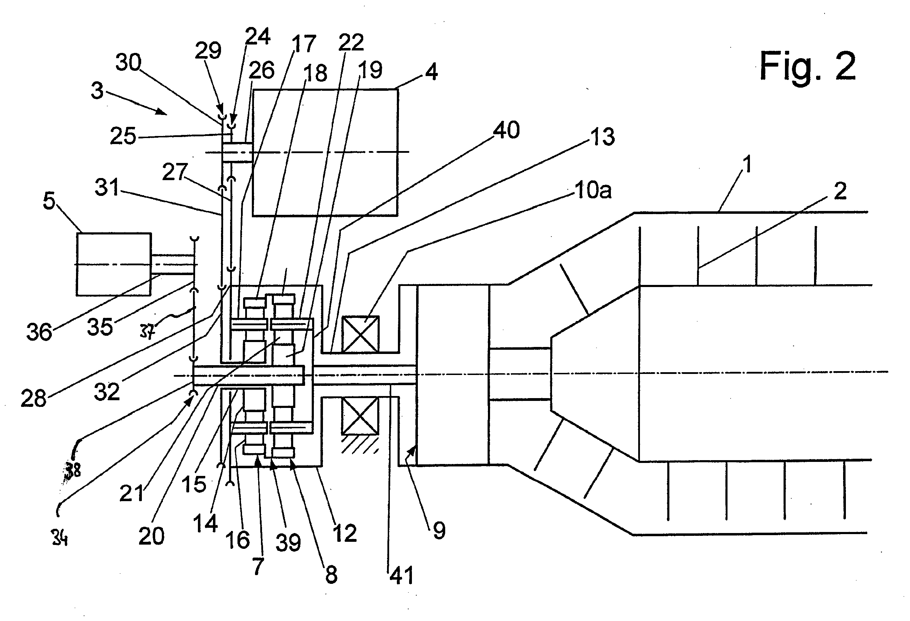

Fig. 1 und 2 zeigen eine Vollmantel-Schneckenzentrifuge mit einer drehbaren Trommel 1 mit vorzugsweise horizontaler Drehachse und einer innerhalb der Trommel 1 angeordneten, ebenfalls drehbaren Schnecke 2, die einen Zentrifugenantrieb 3 zum Drehen von Trommel 1 und Schnecke 2 aufweist. Die Trommel ist zwischen einem antriebsseitigen und einem antriebsabgewandten Trommellager 10a, 10b angeordnet.

Der Zentrifugenantrieb 3 weist einen ersten Motor 4 - auch Hauptmotor genannt - und einen zweiten Motor 5 - auch Regelmotor genannt - sowie eine zwischen den Motoren 4, 5 sowie der Trommel 1 und der Schnecke 2 angeordnete Getriebeanordnung auf.

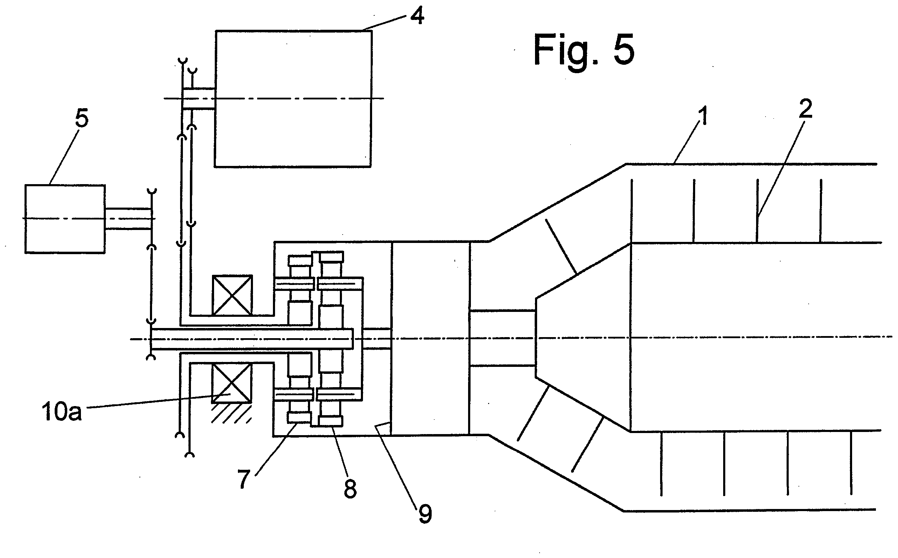

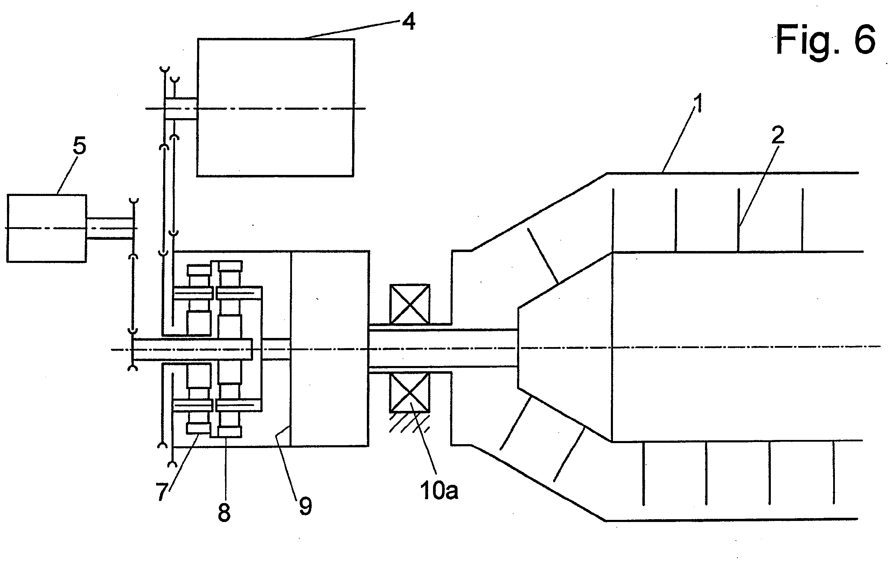

Die Getriebeanordnung umfasst vorzugsweise lediglich ein einziges Getriebe 6 mit drei oder mehr Getriebestufen 7, 8, 9, die den Motoren 4, 5 nachgeschaltet sind, wobei in der hier gewählten Ausgestaltung die ersten beiden Getriebestufen 7, 8 und die dritte Getriebestufe 9 auf den beiden axialen Seiten des antriebsseitigen Trommellagers 10 angeordnet sind. Alternative Ausgestaltungen z.B. mit sämtlichen Getriebestufen 7, 8, 9 innerhalb (Fig. 5) oder außerhalb (Fig. 6) des Trommellagers 10 (relativ zur Trommel 1) sind ebenfalls realisierbar.

Die Auslegung des Getriebes 6 ist dabei derart, dass zwischen der Drehzahl der Trommel 1 und der Drehzahl der Schnecke 2 im Betrieb eine Differenzdrehzahl einstellbar ist.

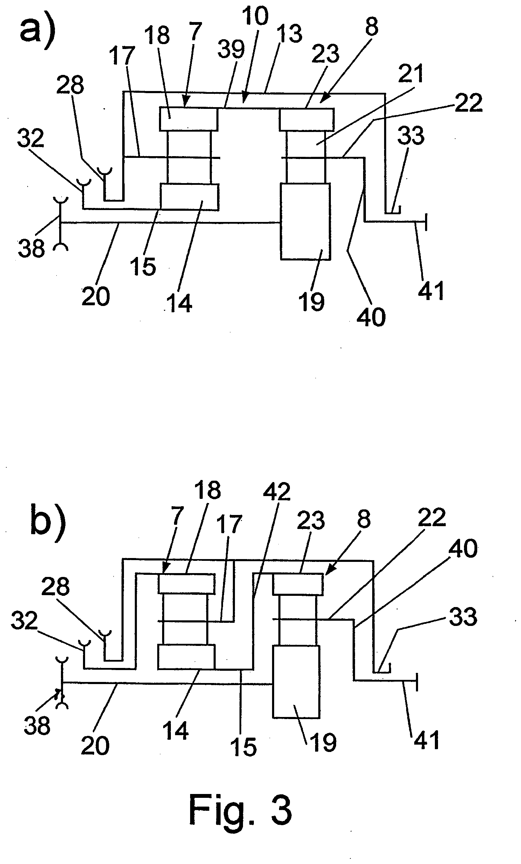

Die erste Getriebestufe 7 und die zweite Getriebestufe 8 des Getriebes 6 sind jeweils planetengetriebeartig ausgebildet, wobei die erste Getriebestufe 7 eine Art Vorstufe und die zweite Getriebestufe 8 eine Art Hauptstufe ausbildet, die beide in einem gemeinsamen Gehäuse 12 angeordnet sind (siehe auch Fig. 3a). Die erste und die zweite Getriebestufe 7, 8 sind umlaufgetriebeartig ausgelegt, wobei das Gehäuse 12 mit angetrieben wird, welches wiederum die Trommel 1 antreibt, die mit dem Gehäuse 12 vorzugsweise über eine Hohlwelle 13 drehfest verbunden ist.

Die erste Getriebestufe 7 weist im Gehäuse 12 ein Sonnenrad 14 auf einer Sonnenradwelle 15, Planetenräder 16 auf Planetenradachsen 17, die zu einem Planetenradträger 33 zusammengefasst sind, und ein äußeres Hohlrad 18 auf.

Die zweite Getriebestufe 8 weist ferner - ebenfalls innerhalb des Gehäuses 12 - ein Sonnenrad 19 auf einer Sonnenradwelle 20, Planetenräder 21 auf Planetenradachsen 22 die zu einem Planetenradträger 40 zusammengefasst sind, und ein äußeres Hohlrad 23 auf.

Der erste Motor 4 treibt direkt (nicht dargestellt) oder indirekt (über einen ersten Umschlingungstrieb 24 mit einer Riemenscheibe 25 auf seiner Motorwelle 26, einem Riemen 27 und einer Riemenscheibe 28, die drehfest mit dem Gehäuse 12 und den Planetenradachsen 17 der Planetenräder 16 der ersten Getriebestufe 7 gekoppelt ist, so dass sie hier auch den Planetenträger 33 ausbildet) das Gehäuse 12 und die Planetenräder 16. Die Riemenscheibe 28 kann auch - wie in Fig. 3 zu erkennen - einstückig mit dem Gehäuse 12 ausgebildet sein oder auf dessen Außenumfang ausgebildet sein.

Darüber hinaus treibt der erste Motor 4 direkt oder indirekt (beispielsweise über einen zweiten Riementrieb 29 mit einer Riemenscheibe 30 auf seiner Motorwelle 26, einem Riemen 31 und einer Riemenscheibe 32) die (Hohl-)Welle 15 für das Sonnenrad 14 der ersten Getriebestufe 7.

Der zweite Motor 5 treibt direkt oder indirekt (beispielsweise über einen dritten Riementrieb 34 mit einer Riemenscheibe 35 auf der Motorwelle 36 des zweiten Motors 5, mit einem Riemen 37 und einer Riemenscheibe 38) die Sonnenradwelle 20 des Sonnenrades 19 der zweiten Getriebestufe 8 an.

Treibt der erste Motor 4 die Trommel an anderer Stelle, könnten die beiden Riementriebe über Vorgelege laufen.

Das Hohlrad 18 ist zudem über ein Zwischenstück mit einem Hohlrad 23 der zweiten Getriebestufe 8 zu einer Zwischenwelle 39 drehfest gekoppelt oder mit diesem einstückig ausgestaltet.

Die Planetenradachsen 22 der Planetenräder 21 der zweiten Getriebestufe 12 treiben über den Planetenradträger 40 eine Zwischenwelle 41 zur dritten Getriebestufe 9, welche (als eine einfache oder wiederum mehrfache Abtriebsgetriebestufe) die Schnecke 2 antreibt (hier nur schematisch angedeutet).

Zwischen dem Gehäuse 12 und der Zwischenwelle 41 ist eine durch die erste und die zweite Getriebestufe 7, 8 einstellbare Differenzdrehzahl realisierbar, die einerseits durch die Drehzahl der Sonnenradwelle 20 der zweiten Getriebestufe 8 und andererseits durch die Drehzahl der Zwischenwelle 39 bestimmt ist.

Zur Einstellung der Differenzdrehzahl wird die Drehzahl der Sonnenradwelle 20 des Sonnenrades 19 der zweiten Getriebestufe 8 mit dem zweiten Motor 5 auf eine definierte Drehzahl gebracht.

Die Drehzahl der Zwischenwelle 39 wird dabei durch die Drehzahl der Sonnenradwelle 15 des Sonnenrades 14 der ersten Getriebestufe 7 bestimmt und ist damit auch von der Ausgangsdrehzahl des ersten (Trommel-) Motors abhängig.

Sowohl die Sonnenradwelle 15 als auch das Gehäuse 12 weisen eine von Null verschiedene Drehzahl auf, wobei die Drehzahl des Gehäuses 12 fest mit der Drehzahl der Sonnenradwelle 15 gekoppelt ist.

Vorteilhaft ist auch, dass die beiden ersten Getriebestufen 7, 8 innerhalb des gemeinsamen (drehbaren) Gehäuses 12 angeordnet sind, da dies kostengünstig realisierbar ist und kompakt baut.

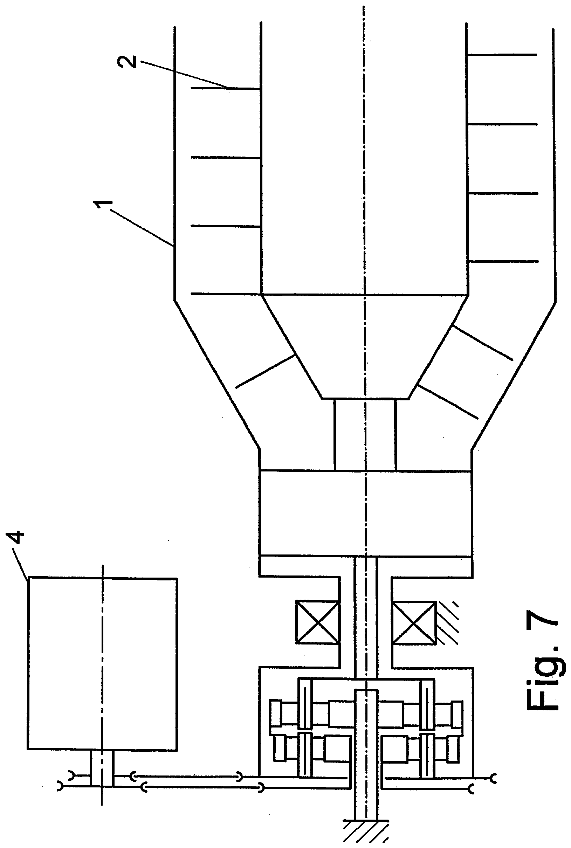

Die Sonnenradwelle 20 könnte ggf. auch auf Null festgesetzt werden. Derart würde ein Antrieb mit nur einem einzigen Motor realisierbar (Fig. 7, die nicht unter den Anspruch 1 fällt).

Alternativ wäre es auch denkbar, nach der Ausgestaltung der Figur 2 jeweils die Sonnenradwelle 15 mit einem dritten Motor anzutreiben (hier nicht dargestellt).

Die Auslegung derart, dass mit dem ersten Motor 4 die Sonnenradwelle 15 und die Planetenradachsen 17 der ersten Getriebestufe 7 sowie das Gehäuse 12 angetrieben werden, ist aber kostengünstiger und einfacher.

Im regulären Betrieb speisen sämtliche Umschlingungstriebe 24, 29, 34 sowie der erste (Trommel) Motor 4 und der (Sekundär-) Motor 5 Leistung in das drehende System (Trommel und Schnecke). Hierdurch werden mit Verlust behaftete Umlauf- oder Bremsleistungen vermieden.

Zudem bildet die erste Getriebestufe 7 eine Art Vorstufe, die mit der zweiten Getriebestufe 8 als eine Art übergeordnete Primärgetriebestufe wirkt.

Nach der Anordnung der Fig. 1 und 2 ist durch die außerhalb des antriebsseitigen Trommellagers 10a liegende Vorstufe eine dynamisch steife Anbindung an das drehende System möglich.

Die beiden ersten Getriebestufen 7, 8 können aber auch vollständig zusammen (ggf. mit weiteren Stufen) zwischen dem antriebsseitigen Trommellager 10a und der Trommel 1 angeordnet werden (Fig. 5) oder relativ zur Trommel 1 außerhalb des antriebsseitigen Trommellagers 10a angeordnet werden.

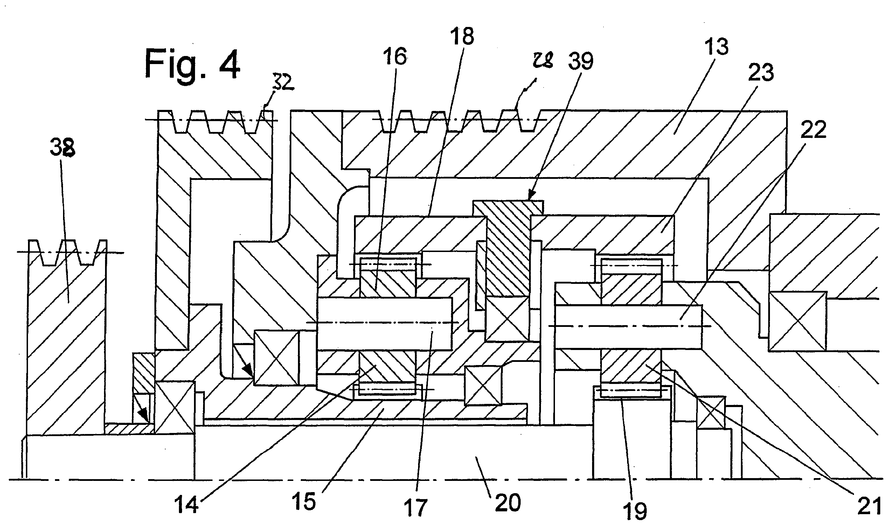

Als Vorteil der Konstruktionen der Fig. 1 bis 8 ist noch zu erwähnen, dass die Abhängigkeit der Differenzdrehzahl vom Schlupf und vom Belastungszustand des Dekanters gering ist.

Zudem kann der Sekundärmotor 5 bei verschiedenen Differenzdrehzahlen gleich bleiben. Die bei höheren Differenzdrehzahlen zusätzlich benötigte Leistung stammt vom ersten (Haupt-)Motor 4, der in der Regel größere Reserven aufweist.

Durch ein Wechseln der Riemen bzw. Riemenscheiben kann der vorgegebene Differenzdrehzahlbereich auf einfache Weise eingestellt werden.

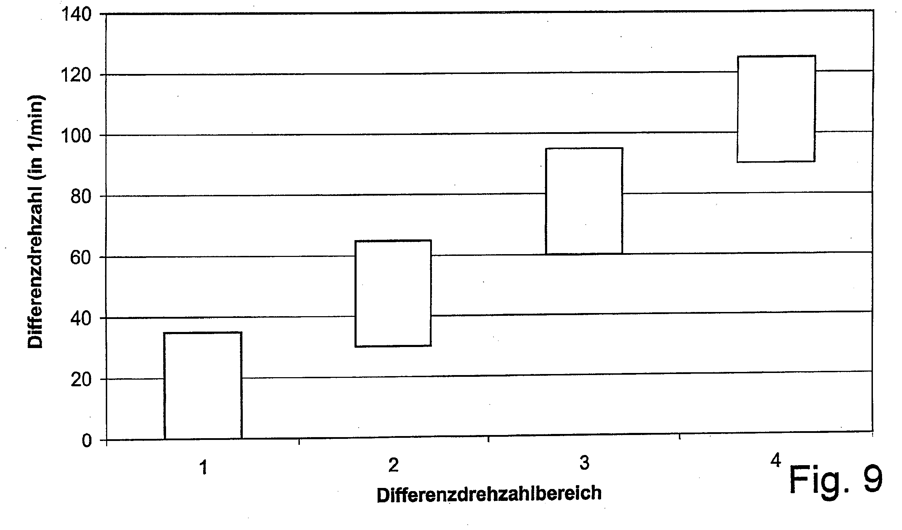

Mit der Erfindung realisierbare - einander ggf. auch teilweise überlappende - Differenzdrehzahlbereiche sind beispielhaft in Fig. 9 dargestellt. Hier ist zu erkennen, dass jeweils beispielsweise durch Austausch der Riemenscheibe 32 und/oder der anderen Riemenscheibe dieses Riementriebes z.B. vier Differenzdrehzahlbereiche "1, 2, 3 und 4" auf einfachste Weise geeignet voreinstellbar sind, die gut insbesondere auf den Regelmotor abstimmbar sind, wobei im Betrieb innerhalb der Bereiche durch Regeln oder Steuern der Motoren 4 und 5 (insbesondere des Motors 5) die Differenzdrehzahl innerhalb der gegebenen Bandbreiten veränderbar ist.

Die Riemenscheibe 32 bzw. der Riementrieb 29 vom ersten Motor dient in der Regel zur Voreinstellung (z.B. mit einer Wechselscheibe) des Differenzdrehzahlbereichs entsprechend zu Figur 9.

Der zweite Motor 5 dient dagegen als der Regelantrieb. Über den ersten Riementrieb bzw. den ersten Umschlingungstrieb 24 wird die Trommeldrehzahl eingestellt. Die Zwischenwelle 41 als Abtriebswelle dient gleichzeitig als Eingangswelle zur dritten Getriebestufe 9, die auf verschiedenste Weise realisiert werden kann.

Figur 3b zeigt eine alternative Ausführungsform der Erfindung, bei der die Riemenscheibe 32 des Riementriebes 29 vom ersten Motor 4 nicht mit der Sonnenradwelle 15 sondern mit dem Hohlrad 18 der ersten Getriebestufe 7 gekoppelt ist und dieses antreibt. In weiterer Abweichung zu Figur 3a ist entsprechend die Sonnenradwelle 15 über ein Zwischenstück 42 mit dem Hohlrad 23 der zweiten Getriebestufe 8 gekoppelt.

Ansonsten entspricht der Aufbau der Fig. 3b dem Aufbau der Figur 3a bzw. 1.

Im Gegensatz zu bekannten Differentialgetrieben wird die Riemenscheibe 38 der Fig. 1 für eine voreilende Schnecke 2 nach Fig. 3a und 3b entgegengesetzt zur Trommeldrehrichtung angetrieben. Damit - zusammen mit einem Exzentergetriebe - die Schnecke 2 voreilt, erfolgt in der zweiten Getriebestufe 8 des Getriebes 6 keine Drehrichtungsumkehr.

Bei der Version der Figur 1, 2 und 3a (und bei denen der Fig. 5 und 6) ist die Differenzdrehzahl proportional zum Drehzahlunterschied zwischen den Sonnenradwellen 15 und 20. Da die Sonnenradwelle 20 der zweiten Stufe hier entgegengesetzt zur Trommel 1 rotiert, wird die Drehzahldifferenz zwischen der Sonnenradwelle 15 und der Sonnenradwelle 20 der ersten und zweiten Getriebestufe 7, 8 vergrößert, wenn die Sonnenradwelle 15 der ersten Getriebestufe 7 auf eine Drehzahl zwischen Null und der Trommeldrehzahl oder größer als die Trommeldrehzahl gebracht wird, da die Sonnenradwelle 15 vom Hauptmotor 4 mit angetrieben wird. Hierdurch vergrößert sich die Differenzdrehzahl in gewünschter Weise.

Bei der Version der Figur 3b ist dieser Effekt stärker als bei der Version der Figur 3a ausgebildet, so dass die letztere Version bevorzugt wird.

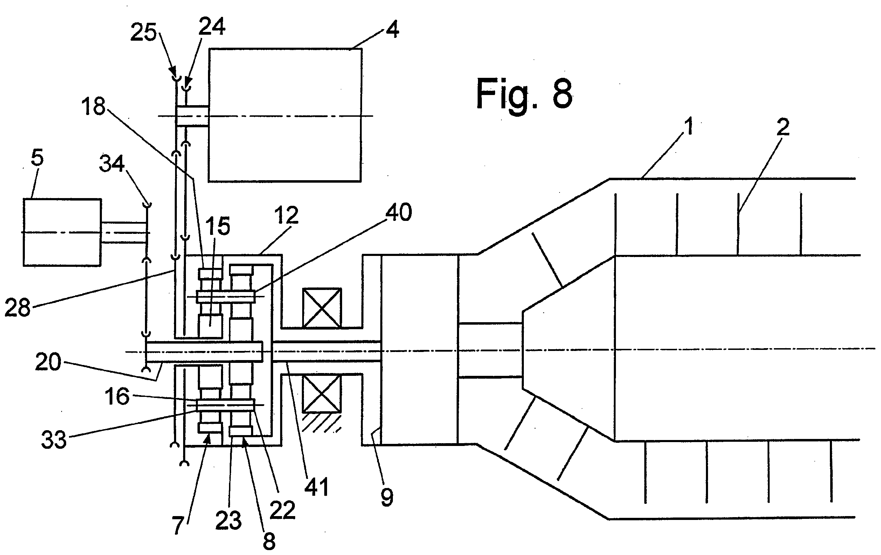

Nach Fig. 8 wird ebenfalls in die erste und die zweite Getriebestufe an drei Wellen ein Drehmoment eingeleitet, wobei aber die erste Riemenscheibe 28 das Hohlrad 18 und die zweite Riemenscheibe das Sonnenrad 15 treibt und wobei die Planetenradachsen 16 der ersten Getriebestufe mit den Planetenradachsen 22 der zweiten Getriebestufe 8 gekoppelt sind. Der Regelmotor 5 treibt wiederum die Sonnenradwelle 20 der zweiten Getriebestufe 8 an, wohingegen das Hohlrad 23 der zweiten Getriebestufe 8 die Zwischenwelle 41 zur dritten Getriebestufe 9 antreibt.

Bei dieser Konstruktion findet keine Drehzahlumkehr statt, was in Kombination mit einem Planetengetriebe herkömmlicher Bauart zu einer voreilenden Schnecke führt.

**Bezugszeichen**

| | |
|---|---|
| Trommel | 1 |
| Schnecke | 2 |
| Zentrifugenantrieb | 3 |
| Motor | 4 |
| Motor | 5 |
| Getriebe | 6 |
| erste Getriebestufe | 7 |
| zweite Getriebestufe | 8 |
| dritte Getriebestufe | 9 |
| Trommellager | 10a, 10b |
| Gehäuse | 12 |
| Hohlwelle | 13 |
| Sonnenrad | 14 |
| Welle | 15 |
| Planetenräder | 16 |
| Planetenradachse | 17 |
| Hohlrad | 18 |
| Sonnenrad | 19 |
| Welle | 20 |
| Planetenräder | 21 |
| Planetenradachse | 22 |
| Hohlrad | 23 |
| Riementrieb | 24 |
| Riemenscheibe | 25 |
| Motorwelle | 26 |
| Riemen | 27 |
| Riemenscheibe | 28 |
| Riementrieb | 29 |
| Riemenscheibe | 30 |
| Riemen | 31 |
| Riemenscheibe | 32 |
| Planetenradträger | 33 |
| Riementrieb | 34 |
| Riemenscheibe | 35 |
| Motorwelle | 36 |
| Riemenscheibe | 37 |
| Riemenscheibe | 38 |
| Zwischenwelle | 39 |
| Planetenradträger | 40 |
| Zwischenwelle | 41 |

## Patentansprüche

1. Schneckenzentrifuge, insbesondere Vollmantel- oder Siebmantelschneckenzentrifuge, mit:
a) einer drehbaren Trommel (1),
b) einer innerhalb der Trommel (1) angeordneten, drehbaren Schnecke (2),
c) einem Zentrifugenantrieb (3) zum Drehen von Trommel (1) und Schnecke (2), der derart ausgelegt ist, dass eine Differenzdrehzahl zwischen Trommel (1) und Schnecke (2) einstellbar ist,
d) wobei der Zentrifugenantrieb (3) folgendes aufweist:
i. einen ersten Motor (4) und einen zweiten Motor (5) sowie
ii. eine zwischen den Motoren (4, 5) sowie der Trommel (1) und der Schnecke (2) angeordnete Getriebeanordnung, die ein den Motoren (4, 5) nachgeschaltetes Getriebe (6) mit einer ersten, einer zweiten und wenigstens einer dritten Getriebestufe (7, 8, 9) aufweist,
e) die erste Getriebestufe planetengetriebeartig ausgebildet ist und ein Sonnenrad (14), Planetenräder (16) und Planetenradachsen (17) an einem Planetenradträger (33) sowie ein Hohlrad (18) aufweist, und
f) die zweite Getriebestufe planetengetriebeartig ausgebildet ist und ebenfalls ein Sonnenrad (19), Planetenräder (21), Planetenradachsen (22) an einem Planetenradträger (40) und ein Hohlrad (23) aufweist.
g) wobei an insgesamt wenigstens vier Wellen Drehmomente in die erste Getriebestufe (7) und die zweite Getriebestufe (8) eingeleitet bzw. aus diesen beiden Getriebestufen abgegriffen werden, und
h) wobei die erste und die zweite Getriebestufe (7, 8) insgesamt an wenigstens drei Wellen angetrieben sind,
**dadurch gekennzeichnet, dass**
i) der erste Motor (4) zum einen ein Drehmoment in das Gehäuse (12) und zum anderen an zwei Wellen ein Drehmoment in die erste Getriebestufe (7) einspeist, und
j) der zweite Motor (5) als Regelmotor ein Drehmoment in die zweite Getriebestufe (8) einspeist,
k) wobei der Hauptmotor (4) direkt oder über eine Getriebeverbindung wie einen Umschlingungstrieb
i. das Gehäuse (12),
ii. den Planetenradträger (33) der ersten Getriebestufe (7), und
iii. die Sonnenradwelle (15) der ersten Getriebestufe (7) treibt, und
l) wobei der zweite Motor als Regelmotor (5)
i. die Sonnenradwelle (20) der zweiten Getriebestufe (8) treibt.

2. Schneckenzentrifuge, insbesondere Vollmantel- oder Siebmantelschneckenzentrifuge, mit:
a) einer drehbaren Trommel (1),
b) einer innerhalb der Trommel (1) angeordneten, drehbaren Schnecke (2),
c) einem Zentrifugenantrieb (3) zum Drehen von Trommel (1) und Schnecke (2), der derart ausgelegt ist, dass eine Differenzdrehzahl zwischen Trommel (1) und Schnecke (2) einstellbar ist,
d) wobei der Zentrifugenantrieb (3) folgendes aufweist:
i. einen ersten Motor (4) und einen zweiten Motor (5) sowie
ii. eine zwischen den Motoren (4, 5) sowie der Trommel (1) und der Schnecke (2) angeordnete Getriebeanordnung, die ein den Motoren (4, 5) nachgeschaltetes Getriebe (6) mit einer ersten, einer zweiten und wenigstens einer dritten Getriebestufe (7, 8, 9) aufweist,
e) die erste Getriebestufe planetengetriebeartig ausgebildet ist und ein Sonnenrad (14), Planetenräder (16) und Planetenradachsen (17) an einem Planetenradträger (33) sowie ein Hohlrad (18) aufweist, und
f) die zweite Getriebestufe planetengetriebeartig ausgebildet ist und ebenfalls ein Sonnenrad (19), Planetenräder (21), Planetenradachsen (22) an einem Planetenradträger (40) und ein Hohlrad (23) aufweist.
g) wobei an insgesamt wenigstens vier Wellen Drehmomente in die erste Getriebestufe (7) und die zweite Getriebestufe (8) eingeleitet bzw. aus diesen beiden Getriebestufen abgegriffen werden, und
h) wobei die erste und die zweite Getriebestufe (7, 8) insgesamt an wenigstens drei Wellen angetrieben sind,
**dadurch gekennzeichnet, dass**
i) der erste Motor (4) zum einen ein Drehmoment in das Gehäuse (12) und zum anderen an zwei Wellen ein Drehmoment in die erste Getriebestufe (7) einspeist, und
j) der zweite Motor (5) als Regelmotor ein Drehmoment in die zweite Getriebestufe (8) einspeist,
k) wobei der Hauptmotor (4) direkt oder über eine Getriebeverbindung wie ein Umschlingungstrieb
i. das Gehäuse (12),
ii. das Hohlrad (18) der ersten Getriebestufe (7),
iii. den Planetenradträger (33) der ersten Getriebestufe (7) treibt, und
l) der zweite Motor als Regelmotor (5)
i. die Sonnenradwelle (20) der zweiten Getriebestufe treibt.

3. Schneckenzentrifuge nach Anspruch 1 oder 2, **dadurch gekennzeichnet, dass** die erste und die zweite Getriebestufe (7, 8) in einem gemeinsamen drehbaren Gehäuse (12) angeordnet sind.

4. Schneckenzentrifuge nach Anspruch 3, **dadurch gekennzeichnet, dass** das Gehäuse (12) drehfest mit der Trommel (1) verbunden ist.

5. Schneckenzentrifuge nach einem der vorstehenden Ansprüche, **dadurch gekennzeichnet, dass** die Schnecke (2) vom Regelmotor (5) und vom Hauptmotor (4) gemeinsam angetrieben ist, wohingegen der Hauptmotor (4) allein die Trommel dreht.

6. Schneckenzentrifuge nach einem der vorstehenden Ansprüche, **dadurch gekennzeichnet, dass** die erste und die zweite Getriebestufe (7, 8) direkt miteinander gekoppelt sind.

7. Schneckenzentrifuge nach einem der vorstehenden Ansprüche, **dadurch gekennzeichnet, dass** der zweite Motor (5) die Sonnenradwelle (20) der zweiten Getriebestufe (12) direkt antreibt.

8. Schneckenzentrifuge nach einem der vorstehenden Ansprüche, **dadurch gekennzeichnet, dass** die erste und die zweite Getriebestufe (7, 8) und das Gehäuse (12) mit drei Umschlingungstrieben (24, 29, 34) angetrieben sind.

9. Schneckenzentrifuge nach einem der vorstehenden Ansprüche, **dadurch gekennzeichnet, dass** der erste Motor (4) über einen ersten Umschlingungstrieb (24) das umlaufende Gehäuse (12) und den Planetenradträger (33) der ersten Getriebestufe (7) antreibt.

10. Schneckenzentrifuge nach einem der vorstehenden Ansprüche, **dadurch gekennzeichnet, dass** der erste Motor (5) über einen zweiten Umschlingungstrieb (29) die Sonnenradwelle (15) der ersten Getriebestufe (7) antreibt.

11. Schneckenzentrifuge nach einem der vorstehenden Ansprüche, **dadurch gekennzeichnet, dass** der erste Motor (4) über den zweiten Umschlingungstrieb (29) das Hohlrad (18) der ersten Getriebestufe (7) antreibt.

12. Schneckenzentrifuge nach einem der vorstehenden Ansprüche, **dadurch gekennzeichnet, dass** das Hohlrad (18) der ersten Getriebestufe (7) und das Hohlrad (23) der zweiten Getriebestufe (8) zu einer Zwischenwelle (39) zusammengeschaltet bzw. drehfest verbunden sind.

13. Schneckenzentrifuge nach einem der vorstehenden Ansprüche, **dadurch gekennzeichnet, dass** die Sonnenradwelle (15) der ersten Getriebestufe (7) drehfest mit dem Hohlrad (23) der zweiten Getriebestufe (8) verbunden ist.

14. Schneckenzentrifuge nach einem der vorstehenden Ansprüche, **dadurch gekennzeichnet, dass** der zweite Motor (5) als Regelmotor zum Einstellen der Differenzdrehzahl die Sonnenradwelle (20) der zweiten Getriebestufe antreibt.

15. Schneckenzentrifuge nach einem der vorstehenden Ansprüche, **dadurch gekennzeichnet, dass** die Planetenradachsen (22) der zweiten Getriebestufe (8) über einen Planetenradträger (40) und ggf. eine Zwischenwelle (41) die dritte Getriebestufe (9) antreiben, welche ein Drehmoment an die Schnecke (2) abgibt und diese antreibt.

16. Schneckenzentrifuge nach einem der vorstehenden Ansprüche, **dadurch gekennzeichnet, dass** der zweite Umschlingungstrieb mindestens eine oder zwei eine Riemenscheibe(n) (32) aufweist, die wechselbar ausgestaltet ist/sind.

17. Schneckenzentrifuge nach Anspruch 16, **dadurch gekennzeichnet, dass** die Riemenscheibe (32) auch den Planetenradträger (33) der ersten Getriebestufe (7) ausbildet.

18. Schneckenzentrifuge nach einem der vorstehenden Ansprüche 16 oder 17, **dadurch gekennzeichnet, dass** eine der Riemenscheiben (28) des ersten Riementriebes einstückig mit dem Gehäuse (12) ausgebildet ist.

19. Schneckenzentrifuge nach einem der vorstehenden Ansprüche 16 bis 18, **dadurch gekennzeichnet, dass** eine der Riemenscheiben (28) des ersten Riementriebes direkt auf dem Außenumfang des Gehäuses (12) ausgebildet ist.

20. Schneckenzentrifuge nach einem der vorstehenden Ansprüche, **dadurch gekennzeichnet, dass** die ersten zwei Getriebestufen (7, 8) zwischen einem antriebsseitigen Trommellager (10a) und der Trommel (1) angeordnet sind.

21. Schneckenzentrifuge nach einem der vorstehenden Ansprüche 1 bis 20,
**dadurch gekennzeichnet, dass** die ersten zwei Getriebestufen (7, 8) relativ zur Trommel (1) außerhalb eines antriebsseitigen Trommellagers (10a) der Trommel (1) angeordnet sind.

22. Schneckenzentrifuge nach einem der vorstehenden Ansprüche 16 bis 18 und 21, **dadurch gekennzeichnet, dass** die erste Riemenscheibe (28) das Hohlrad (18) und die zweite Riemenscheibe das Sonnenrad (15) der ersten Getriebestufe treibt und dass die Planetenradachsen (16) der ersten Getriebestufe mit den Planetenradachsen (22) der zweiten Getriebestufe (8) gekoppelt sind, wobei der zweite Motor (5) wiederum die Sonnenradwelle (20) der zweiten Getriebestufe (18) treibt, wohingegen das Hohlrad (23) der zweiten Getriebestufe die Zwischenwelle (41) zur dritten Getriebestufe (9) antreibt.

## Claims

1. Helical conveyor centrifuge, in particular a solid-bowl or sieve-bowl centrifuge, comprising:
a) a rotatable drum (1),
b) a rotatable screw (2) disposed within the drum (1),
c) a centrifuge drive (3) for rotating the drum (1) and the screw (2), which is designed such that a differential speed between drum (1) and screw (2) can be set,
d) wherein the centrifuge drive (3) has the following:
i. a first motor (4) and a second motor (5), and
ii. a gearing arrangement, which is disposed between the motors (4, 5) and also between the drum (1) and the screw (2) and which has a gearing (6), arranged downstream of the motors (4, 5), having a first, a second and at least a third gear stage (7, 8, 9),
e) the first gear stage is configured in the style of a planetary gearing and has a sun gear (14), planetary gears (16) and planetary gear axles (17) on a planet carrier (33), as well as a ring gear (18), and
f) the second gear stage is configured in the style of a planetary gearing and likewise has a sun gear (19), planetary gears (21), planetary gear axles (22) on a planet carrier (40), and a ring gear (23),
g) wherein, at a total of at least four shafts, torques are introduced into the first gear stage (7) and the second gear stage (8) or are taken off from these two gear stages, and
h) wherein the first and second gear stages (7, 8) are driven at a total of at least three shafts,
**characterized in that**
i) the first motor (4) firstly feeds a torque into the housing (12) and secondly, at two shafts, feeds a torque into the first gear stage (7), and
j) the second motor (5), as a variable speed motor, feeds a torque into the second gear stage (8),
k) wherein the main motor (4) drives directly or via a gear connection such as a wrap drive
i. the housing (12),
ii. the planet carrier (33) of the first gear stage (7), and
iii. the sun gear shaft (15) of the first gear stage (7), and
l) wherein the second motor, as the variable speed motor (5),
i. drives the sun gear shaft (20) of the second gear stage (8).

2. Helical conveyor centrifuge, in particular a solid-bowl or sieve-bowl centrifuge, comprising:
a) a rotatable drum (1),
b) a rotatable screw (2) disposed within the drum (1),
c) a centrifuge drive (3) for rotating the drum (1) and the screw (2), which is designed such that a differential speed between drum (1) and screw (2) can be set,
d) wherein the centrifuge drive (3) has the following:
i. a first motor (4) and a second motor (5), and
ii. a gearing arrangement, which is disposed between the motors (4, 5) and also between the drum (1) and the screw (2) and which has a gearing (6), arranged downstream of the motors (4, 5), having a first, a second and at least a third gear stage (7, 8, 9),
e) the first gear stage is configured in the style of a planetary gearing and has a sun gear (14), planetary gears (16) and planetary gear axles (17) on a planet carrier (33), as well as a ring gear (18), and
f) the second gear stage is configured in the style of a planetary gearing and likewise has a sun gear (19), planetary gears (21), planetary gear axles (22) on a planet carrier (40), and a ring gear (23),
g) wherein, at a total of at least four shafts, torques are introduced into the first gear stage (7) and the second gear stage (8) or are taken off from these two gear stages, and
h) wherein the first and second gear stages (7, 8) are driven at a total of at least three shafts,
**characterized in that**
i) the first motor (4) firstly feeds a torque into the housing (12) and secondly, at two shafts, feeds a torque into the first gear stage (7), and
j) the second motor (5), as a variable speed motor, feeds a torque into the second gear stage (8),
k) wherein the main motor (4) drives directly or via a gear connection such as a wrap drive
i. the housing (12),
ii. the ring gear (18) of the first gear stage (7),
iii. the planet carrier (33) of the first gear stage (7), and
l) the second motor, as the variable speed motor (5),
i. drives the sun gear shaft (20) of the second gear stage.

3. Helical conveyor centrifuge according to claim 1 or 2, **characterized in that** the first and second gear stages (7, 8) are disposed in a common rotatable housing (12).

4. Helical conveyor centrifuge according to claim 3, **characterized in that** the housing (12) is connected in a rotationally secure manner to the drum (1).

5. Helical conveyor centrifuge according to one of the above claims, **characterized in that** the screw (2) is driven jointly by the variable speed motor (5) and by the main motor (4), whereas the main motor (4) alone rotates the drum.

6. Helical conveyor centrifuge according to one of the above claims, **characterized in that** the first and second gear stages (7, 8) are coupled directly to each other.

7. Helical conveyor centrifuge according to one of the above claims, **characterized in that** the second motor (5) directly drives the sun gear shaft (20) of the second gear stage (12).

8. Helical conveyor centrifuge according to one of the above claims, **characterized in that** the first and second gear stages (7, 8) and the housing (12) are driven with three wrap drives (24, 29, 34).

9. Helical conveyor centrifuge according to one of the above claims, **characterized in that** the first motor (4) drives via a first wrap drive (24) the rotary housing (12) and the planet carrier (33) of the first gear stage (7).

10. Helical conveyor centrifuge according to one of the above claims, **characterized in that** the first motor (5) drives via a second wrap drive (29) the sun gear shaft (15) of the first gear stage (7).

11. Helical conveyor centrifuge according to one of the above claims, **characterized in that** the first motor (4) drives via the second wrap drive (29) the ring gear (18) of the first gear stage (7).

12. Helical conveyor centrifuge according to one of the above claims, **characterized in that** the ring gear (18) of the first gear stage (7) and the ring gear (23) of the second gear stage (8) are linked to form an intermediate shaft (39) or are connected in a rotationally secure manner.

13. Helical conveyor centrifuge according to one of the above claims, **characterized in that** the sun gear shaft (15) of the first gear stage (7) is connected in a rotationally secure manner to the ring gear (23) of the second gear stage (8).

14. Helical conveyor centrifuge according to one of the above claims, **characterized in that** the second motor (5) drives as a variable speed motor, for setting of the differential speed, the sun gear shaft (20) of the second gear stage.

15. Helical conveyor centrifuge according to one of the above claims, **characterized in that** the planetary gear axles (22) of the second gear stage (8) drive via a planet carrier (40) and, where appropriate, an intermediate shaft (41), the third gear stage (9), which delivers a torque to the screw (2) and drives the latter.

16. Helical conveyor centrifuge according to one of the above claims, **characterized in that** the second wrap drive has at least one or two belt pulley(s) (32), which is/are designed to be exchangeable.

17. Helical conveyor centrifuge according to claim 16, **characterized in that** the belt pulley (32) also forms the planet carrier (33) of the first gear stage (7).

18. Helical conveyor centrifuge according to either of the above claims 16 and 17, **characterized in that** one of the belt pulleys (28) of the first belt drive is configured in one piece with the housing (12).

19. Helical conveyor centrifuge according to one of the above claims 16 to 18, **characterized in that** one of the belt pulleys (28) of the first belt drive is configured directly on the outer periphery of the housing (12).

20. Helical conveyor centrifuge according to one of the above claims, **characterized in that** the first two gear stages (7, 8) are disposed between a drive-side drum bearing (10a) and the drum (1).

21. Helical conveyor centrifuge according to one of the above claims 1 to 20, **characterized in that** the first two gear stages (7, 8) are disposed relative to the drum (1) outside a drive-side drum bearing (10a) of the drum (1).

22. Helical conveyor centrifuge according to one of the above claims 16 to 18 and 21, **characterized in that** the first belt pulley (28) drives the ring gear (18) and the second belt pulley drives the sun gear (15) of the first gear stage, and **in that** the planetary gear axles (16) of the first gear stage are coupled to the planetary gear axles (22) of the second gear stage (8), the second motor (5) in turn driving the sun gear shaft (20) of the second gear stage (18), whereas the ring gear (23) of the second gear stage drives the intermediate shaft (41) for the third gear stage (9).

## Revendications

1. Centrifugeuse à vis, en particulier centrifugeuse à bol plein ou à bol perforé, comprenant :
a) un tambour rotatif (1),
b) une vis sans fin rotative (2) montée à l'intérieur du tambour (1),
c) un entraînement de centrifugeuse (3) destiné à faire tourner le tambour (1) et la vis sans fin (2), qui est réalisé de telle sorte que la différence de vitesse de rotation entre le tambour (1) et la vis sans fin (2) puisse être réglée,
d) l'entraînement de centrifugeuse (3) comportant les éléments suivants :
i. un premier moteur (4) et un second moteur (5),
ii. ainsi qu'un dispositif de transmission monté entre les moteurs (4, 5) et le tambour (1) et la vis sans fin (2), qui comporte une transmission (6) montée en aval des moteurs (4, 5) et munie d'un premier, d'un second et d'au moins un troisième étages de transmission (7, 8, 9),
e) le premier étage de transmission étant réalisé sous la forme d'une transmission planétaire et comportant une roue solaire (14), des roues planétaires (16) et des axes de roues planétaires (17) montés sur un porte-roues planétaires (33) ainsi qu'une couronne de train planétaire (18), et
f) le second étage de transmission étant réalisé sous la forme d'une transmission planétaire et comportant également une roue solaire (19), des roues planétaires (21), des axes de roues planétaires (22) montés sur un porte-roues planétaires (40) et une couronne de train planétaire (23),
g) des couples de rotation pouvant être appliqués au premier étage de transmission (7) et au second étage de transmission (8) ou pris sur ces deux étages de transmission par un total d'au moins quatre arbres, et
h) le premier et le second étages de transmission (7, 8) étant entraînés au total par au moins trois arbres,
**caractérisée en ce que**
i) le premier moteur (4) fournit, d'une part, un couple de rotation au boîtier (12) et, d'autre part, fournit un couple de rotation au premier étage de transmission (7) sur deux arbres, et
j) le second moteur (5) réalisé sous la forme d'un servomoteur fournit un couple de rotation au deuxième étage de transmission (8),
k) le moteur principal (4) entraînant, directement ou par l'intermédiaire d'une liaison de transmission telle qu'une courroie d'entraînement :
i. le boîtier (12),
ii. le porte-roues planétaires (33) du premier étage de transmission (7) et
iii. l'arbre de roue solaire (15) du premier étage de transmission (7), et
l) le second moteur réalisé comme un servomoteur (5) entraînant :
i. l'arbre de roue solaire (20) du second étage de transmission (8).

2. Centrifugeuse à vis, en particulier centrifugeuse à bol plein ou à bol perforé, comprenant :
a) un tambour rotatif (1),
b) une vis sans fin rotative (2) montée à l'intérieur du tambour (1),
c) un entraînement de centrifugeuse (3) destiné à faire tourner le tambour (1) et la vis sans fin (2), qui est réalisé de telle sorte que la différence de vitesse de rotation entre le tambour (1) et la vis sans fin (2) puisse être réglée,
d) l'entraînement de centrifugeuse (3) comportant les éléments suivants :
i. un premier moteur (4) et un second moteur (5),
ii. ainsi qu'un dispositif de transmission monté entre les moteurs (4, 5) et le tambour (1) et la vis sans fin (2), qui comporte une transmission (6) montée en aval des moteurs (4, 5) et munie d'un premier, d'un second et d'au moins un troisième étages de transmission (7, 8, 9),
e) le premier étage de transmission étant réalisé sous la forme d'une transmission planétaire et comportant une roue solaire (14), des roues planétaires (16) et des axes de roues planétaires (17) montés sur un porte-roues planétaires (33) ainsi qu'une couronne de train planétaire (18), et
f) le second étage de transmission étant réalisé sous la forme d'une transmission planétaire et comportant également une roue solaire (19), des roues planétaires (21), des axes de roues planétaires (22) montés sur un porte-roues planétaires (40) et une couronne de train planétaire (23),
g) des couples de rotation pouvant être appliqués au premier étage de transmission (7) et au second étage de transmission (8) ou pris sur ces deux étages de transmission par un total d'au moins quatre arbres, et
h) le premier et le second étages de transmission (7, 8) étant entraînés au total par au moins trois arbres,
**caractérisée en ce que**
i) le premier moteur (4) fournit, d'une part, un couple de rotation au boîtier (12) et, d'autre part, fournit un couple de rotation au premier étage de transmission (7) sur deux arbres, et
j) le second moteur (5) réalisé sous la forme d'un servomoteur fournit un couple de rotation au deuxième étage de transmission (8),
k) le moteur principal (4) entraînant, directement ou par l'intermédiaire d'une liaison de transmission telle qu'une courroie d'entraînement :
i. le boîtier (12),
ii. la couronne de train planétaire (18) du premier étage de transmission (7) et
iii. le porte-roues planétaires (33) du premier étage de transmission (7) et
l) le second moteur réalisé comme un servomoteur (5) entraînant :
i. l'arbre de roue solaire (20) du second étage de transmission.

3. Centrifugeuse à vis conforme à la revendication 1 ou 2, **caractérisée en ce que** le premier étage de transmission et le second étage de transmission (7, 8) sont montés dans un boîtier rotatif commun (12).

4. Centrifugeuse à vis conforme à la revendication 3, **caractérisée en ce que** le boîtier (12) est relié solidairement en rotation au tambour (1).

5. Centrifugeuse à vis conforme à l'une des revendications précédentes, **caractérisée en ce que** la vis sans fin (2) est entraînée à la fois par le servomoteur (5) et par le moteur principal (4), alors qu'au contraire le moteur principal (4) entraîne seul le tambour en rotation.

6. Centrifugeuse à vis conforme à l'une des revendications précédentes, **caractérisée en ce que** le premier étage de transmission et le second étage de transmission (7, 8) sont directement accouplés.

7. Centrifugeuse à vis conforme à l'une des revendications précédentes, **caractérisée en ce que** le second moteur (5) entraîne l'arbre de roue solaire (20) du second étage de transmission (12).

8. Centrifugeuse à vis conforme à l'une des revendications précédentes, **caractérisée en ce que** le premier étage de transmission et le second étage de transmission (7, 8) ainsi que le boîtier (12) sont entraînés par trois courroies d'entraînement (24, 29, 34).

9. Centrifugeuse à vis conforme à l'une des revendications précédentes, **caractérisée** en le premier moteur (4) entraîne le boîtier rotatif (12) et le porte-roues planétaires (33) du premier étage de transmission (7) par l'intermédiaire d'une première courroie d'entraînement (24).

10. Centrifugeuse à vis conforme à l'une des revendications précédentes, **caractérisée en ce que** le premier moteur (5) entraîne l'arbre de roue solaire (15) du premier étage de transmission (7) par l'intermédiaire d'une seconde courroie d'entraînement (29).

11. Centrifugeuse à vis conforme à l'une des revendications précédentes, **caractérisée en ce que** le premier moteur (4) entraîne la couronne de train planétaire (18) du premier étage de transmission (7) par l'intermédiaire de la seconde courroie d'entraînement (29).

12. Centrifugeuse à vis conforme à l'une des revendications précédentes, **caractérisée en ce que** la couronne de train planétaire (18) du premier étage de transmission (7) et la couronne de train planétaire (23) du second étage de transmission (8) sont rassemblées en un arbre intermédiaire (39) ou sont reliées solidairement en rotation.

13. Centrifugeuse à vis conforme à l'une des revendications précédentes, **caractérisée en ce que** l'arbre de roue solaire (15) du premier étage de transmission (7) est relié solidairement en rotation à la couronne de train planétaire (23) du second étage de transmission (8).

14. Centrifugeuse à vis conforme à l'une des revendications précédentes, **caractérisée en ce que** le second moteur (5), réalisé sous la forme d'un servomoteur entraîne l'arbre de roue solaire (20) du second étage de transmission pour permettre de régler la vitesse de rotation différentielle.

15. Centrifugeuse à vis conforme à l'une des revendications précédentes, **caractérisée en ce que** les axes de roue planétaire (22) du second étage de transmission (8) entraînent par l'intermédiaire d'un porte-roues planétaires (40) et, le cas échéant, d'un arbre intermédiaire (41) le troisième étage de transmission (9) qui applique un couple de rotation à la vis sans fin (2) et entraîne celle-ci.

16. Centrifugeuse à vis conforme à l'une des revendications précédentes, **caractérisée en ce que** la seconde courroie d'entraînement comporte-au moins une ou deux poulie(s) (32) qui est ou sont interchangeable(s).

17. Centrifugeuse à vis conforme à la revendication 16, **caractérisée en ce que** la poulie (32) forme également le porte-roues planétaires (33) du premier étage de transmission (7).

18. Centrifugeuse à vis conforme à l'une des revendications 16 ou 17, **caractérisée en ce que** l'une des poulies (28) de la première courroie d'entraînement est réalisée d'une seule pièce avec le boîtier (12).

19. Centrifugeuse à vis conforme à l'une des revendications 16 à 18, **caractérisée en ce que** l'une des poulies (28) de la première courroie d'entraînement est formée directement sur la périphérie externe du boîtier (12).

20. Centrifugeuse à vis conforme à l'une des revendications précédentes, **caractérisée en ce que** les deux premiers étages de transmission (7, 8) sont montés entre un palier de tambour (10a) situé côté entraînement et le tambour (1).

21. Centrifugeuse à vis conforme à l'une des revendications 1 à 20, **caractérisée en ce que** les deux premiers étages de transmission (7, 8) sont montés, par rapport au tambour (1) à l'extérieur d'un palier de tambour (10a) du tambour (1) situé côté entraînement.

22. Centrifugeuse à vis conforme à l'une des revendications 16 à 18 et 21, **caractérisée en ce que** la première poulie (28) entraîne la couronne de train planétaire (18) tandis que la seconde poulie entraîne la roue solaire (15) du premier étage de transmission, et les axes de roue planétaire (16) du premier étage de transmission sont accouplés aux axes de roue planétaire (22) du second étage de transmission (8), le second moteur (5) entraînant l'arbre de roue solaire (20) du second étage de transmission (18) alors que la couronne de train planétaire (23) du second étage de transmission entraîne l'arbre intermédiaire (41) vers le troisième étage de transmission (9).
